# EUROPÄISCHE PATENTANMELDUNG

(11) **EP 3 239 468 A1**
(43) Veröffentlichungstag der Anmeldung: **01.11.2017**
(21) Anmeldenummer: 16167369.4
(22) Anmeldetag: 27.04.2016
(51) Int. Cl.: F01D 5/28, B22F 3/00, B28B 1/00, C04B 35/478, C04B 35/64, B22F 5/04, B23P 15/04, B22F 3/15, B22F 3/17, C04B 35/645, B22F 7/06, B22F 7/08

(54) **VERFAHREN ZUM HERSTELLEN EINER SCHAUFEL FÜR EINE STRÖMUNGSMASCHINE**

(71) Anmelder: MTU Aero Engines AG, 80995 München (DE)
(72) Erfinder: Schloffer, Martin, 81247 München (DE); Smarsly, Wilfried, 81669 München (DE)

(57) **Zusammenfassung**

Die Erfindung betrifft ein Verfahren zum Herstellen einer Schaufel (10) für eine Strömungsmaschine, insbesondere für ein Flugtriebwerk, umfassend zumindest folgende Schiitte:
- Herstellen eines Schaufelfußes (14) mit einem ersten Plattformbereich (28) aus einem ersten Werkstoff;
- Bereitstellen mindestens einer mit einem metallischen und/oder keramischen Pulver (12) befüllten Kapsel (18) zur Herstellung eines Schaufelblatts (24) mit einem zweiten Plattfoimbereich (30) an dem ersten Plattformbereich (28), wobei das Pulver (12) zumindest einen zweiten Werkstoff umfasst, welcher von dem ersten Werkstoff verschieden ist;
- Herstellen und Formen des Schaufelblatts (24) aus der mit dem Pulver (12) befüllten Kapsel (18) durch wenigstens ein Wärmezuführverfahren und dabei Verbinden des Schaufelfußes (14), mit dem Schaufelblatt (24) an den jeweiligen Plattfoimbereichen (28, 30).

Ein weiterer Aspekt der Erfindung betrifft eine Schaufel, welche durch ein derartiges Verfahren erhältlich und/oder erhalten ist.

## Beschreibung

Die Erfindung betrifft ein Verfahren zum Herstellen einer Schaufel für eine Strömungsmaschine, insbesondere für ein Flugtriebwerk. Ein weiterer Aspekt der Erfindung betrifft eine derartige Schaufel welche durch ein entsprechendes Verfahren erhältlich und/oder erhalten ist.

Bei der Fertigung von Schaufeln für Strömungsmaschinen ist zur Gewährleistung einer hohen Ausfallsicherheit größte Sorgfalt geboten. Hinsichtlich der Auslegung und Herstellung der Schaufeln liegt eine erhebliche Herausforderung darin, dass diese einerseits extremen mechanischen und thermischen Belastungen Stand halten sollen und andererseits ein möglichst hoher Wirkungsgrad beim Betrieb der Strömungsmaschine erreicht werden soll.

Aus der EP 1 878 522 A1 ist ein Verfahren zum Herstellen von Turbinenschaufeln durch ein Schichtauftragsverfahren bekannt. Die Turbinenschaufeln werden dabei mittels Elektronenstrahlsinterung aus einem metallischen Pulver gewonnen. Die DE 10 2013 205 956 A1 beschreibt eine Herstellung von Schaufeln aus unterschiedlichen Werkstoffen. Die Schaufeln werden dabei generativ durch Auftragsschweißen eines TiAl-Pulvers auf einer Scheibe gebildet. Ein weiteres Verfahren zur Herstellung von Bauteilen aus einem Pulver ist der EP 2 551 040 A1 als bekannt zu entnehmen. Die DE 10 2012 201 082 A1 zeigt ein Verfahren zum Herstellen geschmiedeter Bauteile aus einer TiAl-Legierung. Hierbei werden die Bauteile durch sogenanntes isothermes Schmieden geformt und nachfolgend einer Wärmebehandlung unterzogen. Die Verwendung einer TiAl-Legierung zum Herstellen von Komponenten einer Strömungsmaschine ist auch aus der EP 2 905 350 A1 bekannt. Weitere Verfahren zur Herstellung von Schaufeln sind in den Druckschriften DE 10 2012 222 745 A1 und JP 2008 208432 A angegeben.

Eine Aufgabe der vorliegenden Erfindung ist es, ein Verfahren der eingangs genannten Art zu schaffen, welches eine flexible Werkstoffwahl beim Herstellen einer Schaufel und damit eine besonders auf die mechanischen und thermischen Belastungen der Schaufel abgestimmte Schaufelfertigung zulässt. Eine weitere Aufgabe der Erfindung ist es, eine Schaufel bereitzustellen bei welcher die Werkstoffe einzelner Komponenten der Schaufel besonders flexibel auswählbar sind. Die Aufgaben werden erfindungsgemäß durch ein Verfahren mit den Merkmalen des Patentanspruchs 1 oder durch eine Schaufel mit den Merkmalen des Patentanspruchs 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen des jeweils anderen Erfindungsaspekts und umgekehrt anzusehen sind.

Ein erster Aspekt der Erfindung betrifft ein Verfahren zum Herstellen einer Schaufel für eine Strömungsmaschine, insbesondere für ein Flugtriebwerk, umfassend zumindest folgende Schritte:
- Herstellen eines Schaufelfußes mit einem ersten Plattformbereich aus einem ersten Werkstoff;
- Bereitstellen mindestens einer mit einem metallischen und/oder keramischen Pulver befüllten Kapsel zur Herstellung eines Schaufelblatts mit einem zweiten Plattformbereich an dem ersten Plattformbereich, wobei das Pulver zumindest einen zweiten Werkstoff umfasst, welcher von dem ersten Werkstoff verschieden ist;
- Herstellen und Formen des Schaufelblatts aus der mit dem Pulver befüllten Kapsel durch wenigstens ein Wärmezuführverfahren und dabei Verbinden des Schaufelfußes, mit dem Schaufelblatt an den jeweiligen Plattformbereichen.

Die beiden Plattformbereiche können zu einer Plattform und dabei der Schaufelfuß mit dem Schaufelblatt verbunden werden. Die Plattform kann dabei ein sogenanntes Innendeckband sein. Das Herstellen des Schaufelfußes kann dabei beispielsweise durch Schmieden erfolgen und getrennt von dem Bereitstellen des Schaufelblatts durchgeführt werden. Bei dem ersten Werkstoff kann es sich beispielsweise um sogenanntes TNM-TiAl, welches auch als Titanaluminid (oder in Kurzform: γ-Titan, wobei die Buchstaben N und M für die Elemente Niob bzw. Molybdän stehen) bezeichnet werden kann, handeln. Diese Werkstoffgruppe zeichnet sich durch eine besonders hohe Warmfestigkeit bei gleichzeitig geringer Dichte aus. Dementsprechend ist dieser Werkstoff besonders geeignet, um daraus Bauteile herzustellen, welche bei deren bestimmungsgemäßem Gebrauch hohen Temperaturen und großen Fliehkräften ausgesetzt sind. Das Pulver, mit welchem die Kapsel befüllt ist, kann beispielsweise aus einem oder mehreren metallischen und zusätzlich oder alternativ aus einem oder mehreren keramischen Werkstoffen gebildet sein. Werden zwei oder mehr verschiedene Metalle verwendet, so kann aus dem Pulver eine sogenannte intermetallische Verbindung durch das Wärmezuführverfahren gebildet werden. Dabei ist auch eine Verwendung einer Mischung aus metallischen und keramischen Werkstoffen als das Pulver denkbar. Die Kapsel kann für das Schaufelblatt formgebend sein, so dass eine gewünschte Endform des Schaufelblatts beispielsweise durch eine Außenkontur der Kapsel sowie durch einen entsprechend geformten Innenraum der Kapsel vorgegeben werden kann. In dem Innenraum der Kapsel kann zudem ein Unterdruck herrschen, welcher beispielsweise bereits beim Herstellen der Kapsel erzeugt werden kann. Bei dem Bereitstellen der Kapsel an dem Schaufelfuß kann beispielsweise ein Anordnen der bereits mit dem Pulver befüllten Kapsel an dem Schaufelfuß erfolgen. Alternativ dazu können beispielsweise durch ein generatives Herstellverfahren ein Aufbauen der Kapsel an dem Schaufelfuß und gleichzeitig ein Befüllen der Kapsel mit dem Pulver erfolgen. Bei dem Aufbauen der Kapsel an dem Schaufelfuß können einerseits das Herstellen der Kapsel und andererseits das Anordnen der Kapsel an dem Schaufelfuß prinzipbedingt gleichzeitig erfolgen. Die mit dem Pulver befüllte Kapsel kann gemeinsam mit dem Schaufelfuß dem besagten Wärmezuführverfahren unterzogen werden, wobei bei dem Wärmezuführverfahren ein Erwärmen des Pulvers beispielsweise auf eine Schmelztemperatur oder auf eine Sintertemperatur des Pulvers erfolgen kann. So kann beispielsweise aus der mit dem Pulver befüllten Kapsel das Schaufelblatt hergestellt werden, indem die Kapsel evakuiert (Erzeugen des Unterdrucks im Innenraum der Kapsel), ausgeheizt, mit dem Schaufelfuß verschweißt und einem heiß-isostatischen Pressen (oder kurz: HIP) als dem Wärmezuführverfahren unterzogen wird. Bei diesem HIP kann das Pulver konsolidiert und mit dem Schaufelfuß diffusionsverschweißt werden. Als der zweite Werkstoff, aus welchem das Schaufelblatt hergestellt werden kann, kann beispielweise ein hochlegierter TiAI-Werkstoff eingesetzt werden, welchem Legierungsbestandteile wie W, Mo, Nb oder Co zugesetzt sein können, um nur einige mögliche Legierungsbestandteile zu nennen. Durch die Verwendung des zweiten Werkstoffs, welcher von dem ersten Werkstoff verschieden ist ergibt sich eine besonders flexible Werkstoffwahl beim Herstellen der Schaufel wodurch eine besonders auf die mechanischen und thermischen Belastungen der Schaufel abgestimmte Schaufelfertigung ermöglicht ist.

In einer vorteilhaften Ausgestaltung der Erfindung wird die Kapsel durch ein generatives Herstellverfahren, insbesondere durch Elektronenstrahlschmelzen und/oder durch selektives Laserschmelzen (auch als SLM bezeichnet), aus dem Pulver hergestellt und mit dem Pulver befüllt. Durch derartige generative Herstellverfahren kann sowohl ein Herstellen der Kapsel als auch zusätzlich deren gleichzeitiges Fügen mit dem Schaufelfuß erfolgen. Somit ist also eine in-situ-Herstellung der Kapsel an dem Schaufelfuß möglich, bei welcher der Schaufelfuß in einem aus dem Pulver bestehenden Pulverbett platziert und die Kapsel durch das generative Herstellverfahren schichtweise aus dem Pulver aufgebaut werden kann. Bei dem ersten Werkstoff und bei dem zweiten Werkstoff kann es sich wie bereits erwähnt um zwei voneinander verschiedenen TiAl-Legierungen handeln, welche durch das generative Herstellverfahren miteinander verbunden werden können. Die Kapsel und der Schaufelfuß können dementsprechend durch das generative Herstellverfahren an einer gemeinsamen Verbindungszone, zu welcher ein Verbindungsbereich des Schaufelblatts und zumindest eine Teilfläche einer Schaufelfußfläche des Schaufelfußes gehören, besonders zuverlässig verbunden werden. Diese Verbindungszone kann einem unkritisch belasteten Bereich der Schaufel entsprechen und eine besonders große Querschnittsfläche aufweisen. Das Befüllen der Kapsel mit dem Pulver kann beispielsweise über eine an der Kapsel vorgesehene und in den Innenraum mündende Öffnung erfolgen, wobei die Öffnung nach dem Befüllen mittels des generativen Herstellverfahrens verschlossen und die Kapsel damit versiegelt werden kann. Das Befüllen der Kapsel nach deren Herstellung hat den Vorteil, dass als das Pulver auch ein von dem ersten Werkstoff und dem zweiten Werkstoff verschiedener Pulverwerkstoff in die Kapsel eingefüllt werden kann. Damit ist eine besonders flexible Werkstoffwahl möglich.

In einer weiteren vorteilhaften Ausgestaltung der Erfindung wird die Kapsel durch das generative Herstellverfahren durch schichtweises Aufbauen der Kapsel an dem Schaufelfuß hergestellt. Die Kapsel kann dabei unmittelbar auf dem Schaufelfuß aufgebaut werden, wodurch die Schaufel insgesamt mit besonders wenigen Fertigungsschritten hergestellt werden kann.

In einer weiteren vorteilhaften Ausgestaltung der Erfindung wird das Pulver vor dem Herstellen der Kapsel durch das generative Herstellverfahren und/oder vor dem Befüllen der Kapsel auf eine Erwärmungstemperatur erwärmt, welche kleiner ist als eine Schmelztemperatur und/oder als eine Sintertemperatur des Pulvers. Dies bringt mehrere Vorteile mit sich. Während der Herstellung der Kapsel kann durch das Erwärmen des Pulvers auf die Erwärmungstemperatur etwaige, zwischen den Pulverkörnern befindliche Luft aufgeheizt und dadurch deren Luftdichte verringert werden. Bei der Erwärmungstemperatur kann es zudem bereits zu einem Ansintern zumindest einzelner Pulverkörner kommen. Nach dem Verschließen der Kapsel gegenüber der Umgebung kann bei einem anschließenden Abkühlen des Pulvers, der in dem Innenraum verbleibenden Luft und der Kapsel ein Unterdruck in letzterer entstehen oder ein bereits bestehender Unterdruck verstärkt werden. Dadurch kann eine besonders effektive Verdichtung des Pulvers in der Kapsel erfolgen und das Schaufelblatt mit einem besonders geringen Porenanteil und entsprechend großer Stabilität hergestellt werden. Ein weiterer Vorteil des Erwärmens ist, dass dadurch das Bereitstellen der Kapsel erheblich beschleunigt werden kann. Dies ist damit zu begründen, dass aus dem vorgewärmten Pulver, aus welchem die Kapsel hergestellt werden kann, durch lediglich geringfügige, weitere Temperaturerhöhung ein Versintern oder Verschmelzen der Pulverkörner zu der Kapsel erfolgen kann. Das Erwärmen des Pulvers auf die Erwärmungstemperatur beschleunigt dementsprechend die Herstellung des Schaufelblatts aus dem Pulver, so dass lediglich ein Zuführen eines geringen Energiebetrags nötig ist, um das Pulver ausgehend von der Erwärmungstemperatur auf die Schmelztemperatur oder die Sintertemperatur aufzuheizen und beispielsweise durch heiß-isostatisches Pressen aus dem Pulver das Schaufelblatt herzustellen. Des Weiteren trägt ein geringer Luftanteil infolge der Erzeugung des Unterdrucks dazu bei, dass etwaige, unerwünschte Oxidationsprozesse des Pulvers bei dessen Erwärmung weniger stark ausgeprägt sind, als dies unter atmosphärischem Luftdruck und entsprechend größeren Luftanteilen im Pulver der Fall wäre.

In einer weiteren vorteilhaften Ausgestaltung der Erfindung wird die Kapsel mit dem Pulver befüllt, indem bei dem generativen Herstellverfahren zumindest ein Teilbereich der Kapsel schichtweise als umfangsseitig geschlossenes Hohlprofil aus dem Pulver hergestellt und dabei zumindest eine Teilmenge des Pulvers wenigstens durch den Teilbereich umgeben wird. Das Pulver wird somit bei dem schichtweisen Aufbau der Kapsel (bei dem generativen Herstellverfahren) in der Kapsel eingeschlossen. Es ist also kein separater Arbeitsschritt erforderlich, in welchem das Pulver in die Kapsel eingefüllt werden müsste. Bei dem generativen Herstellverfahren kann also ein besonders aufwandsarmes Befüllen der Kapsel erreicht werden.

In einer weiteren vorteilhaften Ausgestaltung der Erfindung wird die Kapsel derart bereitgestellt, dass in einem zur Aufnahme des Pulvers ausgebildeten Innenraum der Kapsel ein Unterdruck erzeugt wird. Durch das Erzeugen des Unterdrucks sollte idealerweise ein Zustand eingestellt werden, welcher einem Vakuum in der Kapsel besonders nahe kommt. Durch das Erzeugen des Unterdrucks enthält das in dem Innenraum befindliche Pulver besonders wenig Luft, weshalb auch das aus dem Pulver herzustellende Schaufelblatt wenige Poren enthält und somit besonders stabil ist. Das Erzeugen des Unterdrucks kann während der Herstellung der Kapsel erfolgen, so dass beispielsweise die Kapsel in einer mit einem Unterdruck beaufschlagten Arbeitskammer hergestellt wird. Prinzipiell wäre es aber auch möglich die Kapsel zunächst unter atmosphärischem Druck aufzubauen und anschließend überschüssige Luft durch eine Austrittsöffnung in der Kapsel aus dem Innenraum herauszusaugen, wobei die Austrittsöffnung anschließend zu verschließen wäre.

In einer weiteren vorteilhaften Ausgestaltung der Erfindung wird ein Verbindungsbereich des Schaufelblatts, an welchem dieses mit dem Schaufelfuß verbunden wird, aus dem ersten Werkstoff und/oder aus dem zweiten Werkstoff hergestellt. Der Verbindungsbereich des Schaufelblatts kann gleichzeitig einem Kapselboden der Kapsel entsprechen, an welchem diese mit einer Schaufelfußfläche des Schaufelfußes verbunden werden kann. Dies ist damit zu begründen, dass aus der Kapsel und dem darin enthaltenen Pulver das Schaufelblatt geformt werden kann. Bei der Herstellung des Schaufelblatts aus dem Pulver kann letzteres durch Versintern oder durch Verschmelzen konsolidiert und mit der Kapsel zu dem Schaufelblatt verbunden werden, wobei zwischen dem Verbindungsbereich und dem Schaufelfuß ein Stoffschluss gebildet werden kann. Der Verbindungsbereich kann aus blankem TiAl, also beispielsweise aus TNM-TiAl, hergestellt werden, welches von dem zweiten Werkstoff verschieden ist. Prinzipiell ist eine Herstellung des Verbindungsbereichs aus dem ersten Werkstoff und zusätzlich oder alternativ aus dem zweiten Werkstoff denkbar, sofern dies im Rahmen der Anforderungen an die mechanische und/oder thermische Belastbarkeit zulässig ist.

In einer weiteren vorteilhaften Ausgestaltung der Erfindung wird eine Schaufelfußfläche des Schaufelfußes, an welcher dieser mit dem Schaufelblatt verbunden wird, vor dem Verbinden durch ein spanendes Verfahren und/oder durch ein Elektrolyseverfahren geglättet. Durch das dem Verbinden vorausgehende Glätten der Schaufelfußfläche kann eine besonders haltbare Verbindung zwischen dem Schaufelfuß und dem Schaufelblatt geschaffen werden. Das Glätten kann beispielsweise an einer Schaufelfußfläche des Schaufelfußes erfolgen. Bei dem Glätten kann eine mechanische (z.B. spanende) oder elektrolytische Bearbeitung erfolgen und dabei die Schaufelfußfläche geglättet werden, um eine metallisch blanke Fügefläche bereitzustellen.

In einer weiteren vorteilhaften Ausgestaltung der Erfindung wird als das wenigstens eine Wärmezuführverfahren ein heiß-isostatisches Pressen durchgeführt. Die mit dem Pulver befüllte Kapsel kann beim heiß-isostatischen Pressen (oder kurz: HIP) unter hohen Drücken und Temperaturen verdichtet und dadurch das Schaufelblatt aus der Kapsel und dem darin enthaltenen Pulver hergestellt werden. Sofern die Kapsel nicht ohnehin bereits bei deren Herstellung durch ein generatives Herstellverfahren mit dem Schaufelfuß verbunden wurde, kann bei dem heiß-isostatischen Pressen gleichzeitig ein Diffusionsverschweißen der Kapsel mit dem Schaufelfuß erfolgen. Dabei ergibt sich eine sehr dünne, definierte Verbindungszone, die durch eine entsprechende geometrische Wahl der Kapsel und des Schaufelfußes am größten Querschnitt der endbearbeiteten Schaufel positioniert sein kann. Dies ist besonders günstig, zumal am größten Querschnitt die geringsten Spannungen beim bestimmungsgemäßen Einsatz der Schaufel auftreten. Beim HIP wird eine Mikrostruktur im - beispielsweise aus TNM-TiAl hergestellten - Schaufelfuß in eine sogenannte Triplex-Mikrostruktur mit hohem globularem Gamma-Anteil umgewandelt, wodurch beispielsweise ein gute Zerspanbarkeit des Schaufelfußes erreicht werden kann.

In einer weiteren vorteilhaften Ausgestaltung der Erfindung wird das Schaufelblatt nach dessen Herstellung zum Einstellen einer Korngrößenverteilung einer lokalen Glüherwärmung unterzogen. Bei dieser Glüherwärmung kann eine an die Herstellung anschließende globale Ofenglühung der gesamten Schaufel oder alternativ dazu eine lokale, induktive Aufheizung des Schaufelblatts aus der hochlegierten TiAl-Legierung erfolgen. Diese Arten der Glühbehandlung werden in einem Temperaturbereich durchgeführt, in welchem eine homogene Korngrößenverteilung in der Schaufel erreicht werden kann, so dass eine optimale Kriechfestigkeit im Schaufelblatt und eine hohe Festigkeit im Schaufelfuß eingestellt werden können.

In einer weiteren vorteilhaften Ausgestaltung der Erfindung werden der Schaufelfuß und das Schaufelblatt nach dem Verbinden einem gemeinsamen Auslagerungsglühen unterzogen. Die gesamte Schaufel kann in einem geeigneten Temperaturbereich einem derartigen Auslagerungsglühen unterzogen werden, wobei es zur Bildung einer Ausscheidungshärtung im Schaufelblatt kommen kann. Durch das Auslagerungsglühen werden zwar Ausscheidungen im Schaufelblatt erzeugt, gleichzeitig werden jedoch die Eigenschaften in dem beispielsweise aus TNM-TiAI hergestellten Schaufelfuß durch das Auslagerungsglühen nicht negativ beeinflusst.

In einer weiteren vorteilhaften Ausgestaltung der Erfindung wird der Schaufelfuß hergestellt, indem ein Körper aus dem ersten Werkstoff bereitgestellt, geschmiedet, homogenisierungsgeglüht und anschließend zu dem Schaufelfuß geformt wird. Der Schaufelfuß kann beispielsweise aus dem besagten Körper, welcher beispielsweise als Platte aus TNM-TiAI ausgebildet ist, hergestellt sein. Diese Platte kann nach deren Schmieden und Homogenisierungsglühen beispielsweise in quaderförmige Halbzeuge für die Herstellung einer Mehrzahl von Schaufelfüßen zerteilt werden. Die Halbzeuge können dann zu den Schaufelfüßen geformt werden. Dies stellt ein besonders kostengünstiges Herstellverfahren dar, bei welchem mehrere Schaufelfüße aufwandsarm bereitgestellt werden können.

In einer weiteren vorteilhaften Ausgestaltung der Erfindung wird als der erste Werkstoff eine TiAl-Legierung, insbesondere eine γ-TiAl-Legierung, bereitgestellt. Eine derartige γ-TiAl-Legierung, welche auch als TNM-TiAI bezeichnet werden kann, weist eine besonders hohe Warmfestigkeit bei gleichzeitig geringer Dichte auf. Somit ist γ-TiAl besonders für den Einsatz in Flugtriebwerken, also beispielsweise als Werkstoff für den Schaufelfuß, geeignet.

In einer weiteren vorteilhaften Ausgestaltung der Erfindung wird als der zweite Werkstoff eine TiAl-Legierung, insbesondere eine TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt. Durch die Verwendung dieser Legierungsbestandteile kann eine besonders gezielte Einstellung von Bauteileigenschaften erreicht werden. Somit sind diese Legierungen besonders geeignet um gewünschte Bauteileigenschaften beispielsweise des Schaufelblatts einzustellen.

Ein zweiter Aspekt der Erfindung betrifft eine Schaufel für eine Strömungsmaschine, insbesondere für ein Flugtriebwerk, welche durch ein erfindungsgemäßes Verfahren erhältlich und/oder erhalten ist. Eine derartige Schaufel kann bei einer besonders flexiblen Auswahl an Werkstoffen bereitgestellt werden. Die Werkstoffe können dabei je nach Art der Belastung der Schaufel miteinander kombiniert werden. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

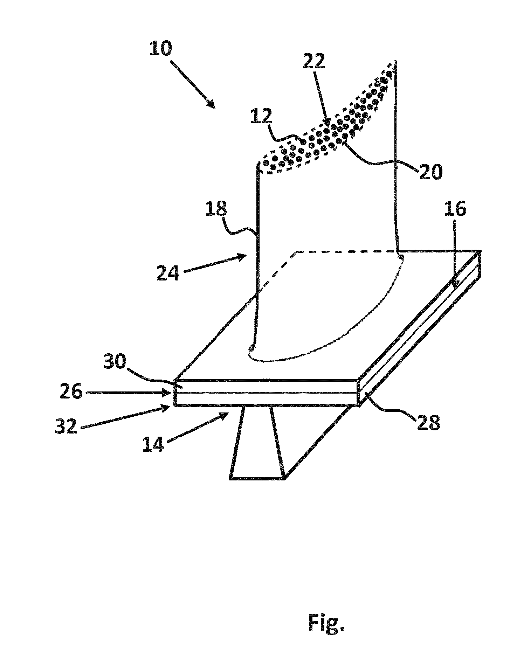

Weitere Merkmale der Erfindung ergeben sich aus den Ansprüchen, den Ausführungsbeispielen sowie anhand der Zeichnung. Die vorstehend in der Beschreibung genannten Merkmale und Merkmalskombinationen, sowie die nachfolgend in den Ausführungsbeispielen genannten und/oder alleine beschriebenen Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Dabei zeigt die einzige Figur eine schematische Perspektivansicht einer erfindungsgemäßen Schaufel für eine Strömungsmaschine.

Die Fig. zeigt eine Schaufel 10 für eine Strömungsmaschine für ein Flugtriebwerk. Die Schaufel 10 kann, wie im vorliegenden Ausführungsbeispiel, als Rotorschaufel für einen hier nicht weiter dargestellten Rotorgrundkörper ausgebildet sein. Die Schaufel 10 könnte jedoch alternativ dazu auch beispielsweise als Leitschaufel eines Leitrades ausgebildet sein.

Ein Schaufelfuß 14 der Schaufel 10 weist einen ersten Plattformbereich 28 auf und ist vorliegend aus einem, aus einer γ-TiAl-Legierung gebildeten ersten Werkstoff hergestellt, wobei die γ-TiAl-Legierung eine TNM-TiAl-Legierung sein kann. Der Schaufelfuß 14 ist dabei aus einem geschmiedeten, homogenisierungsgeglühten Körper aus dem ersten Werkstoff geformt.

Des Weiteren zeigt die Figur eine Kapsel 18, welche einen mit einem metallischen Pulver 12 befüllten Innenraum 22 aufweist. Die Kapsel 18 weist einen zweiten Plattformbereich 30 auf, ist an einer Schaufelfußfläche 16 auf dem ersten Plattformbereich 28 des Schaufelfußes 14 angeordnet und im vorliegenden Ausführungsbeispiel für ein Schaufelblatt 24 der Schaufel 10 formgebend. Die Kapsel 18 ist durch ein generatives Herstellverfahren - im vorliegenden Ausführungsbeispiel durch Elektronenstrahlschmelzen - aus einem mit dem Pulver 12 befüllten, hier nicht weiter dargestellten, Pulverbett gebildet. Die Kapsel 18 ist schichtweise und unmittelbar an der Schaufelfußfläche 16 des Schaufelfußes 14 aufgebaut. Dadurch sind die beiden Plattformbereiche 28, 30 zu einer Plattform 32 und damit der Schaufelfuß 14 mit dem Schaufelblatt 24 verbunden. Die Plattform 32 kann dabei ein sogenanntes Innendeckband sein. Um eine besonders haltbare Verbindung zwischen der Kapsel 18 und dem Schaufelfuß 14 herzustellen, wurde die Schaufelfußfläche 16 und damit der erste Plattformbereich 28 vor dem Verbinden durch ein Elektrolyseverfahren geglättet.

Zur Beschleunigung des Aufbaus der Kapsel 18 an dem Schaufelfuß 14 (auf der Schaufelfußfläche 16) wurde das Pulver 12 vor dem Herstellen der Kapsel 18 auf eine Erwärmungstemperatur erwärmt, welche unterhalb einer Sintertemperatur des Pulvers 12 liegt. Dadurch ist ein Versintern des Pulvers 12 unter Herstellung der Kapsel 18 bei lediglich geringer, weiterer Energiezufuhr möglich. Das Befüllen des Innenraums 22 der Kapsel 18 mit dem Pulver 12 ist bei dem generativen Herstellverfahren erfolgt, indem zumindest ein in der Figur gestrichelt dargestellter Teilbereich 20 der Kapsel 18 schichtweise als umfangsseitig geschlossenes Hohlprofil aus dem Pulver 12 hergestellt wurde. Dabei wurde eine Teilmenge des Pulvers 12 aus dem Pulverbett durch den Teilbereich 20 umgeben und während des Aufbaus der Kapsel 18 in der Kapsel 18 eingeschlossen. Zudem wurde zur Verringerung von etwaigen Oxidationsprozessen und zur Verdichtung des Pulvers 12 im Innenraum 22 der Kapsel 18 ein Unterdruck während der Herstellung der Kapsel 18 erzeugt.

Das Pulver 12 ist vorliegend aus einem zweiten Werkstoff gebildet, welcher von dem ersten Werkstoff verschieden ist. Der zweite Werkstoff ist als eine TiAl-Legierung welche neben Ti und Al als weiteren Legierungsbestandteil Wolfram (W) umfasst, ausgebildet. Die TiAl-Legierung kann auch andere oder mehrere Elemente aus der Gruppe W, Mo, Nb, Co, Hf, Y, Zr, Er, Gd, Si und C umfassen, um die Werkstoffeigenschaften des Pulvers 12 und damit des daraus herzustellenden Schaufelblatts 24 möglichst exakt einzustellen.

Das Herstellen und Formen des Schaufelblatts 24 aus der mit dem Pulver 12 befüllten Kapsel 18 erfolgt durch ein Wärmezuführverfahren, welches im vorliegenden Ausführungsbeispiel einem heiß-isostatischen Pressen entspricht. Dabei kommt es zu einem Diffusionsverschweißen eines Verbindungsbereichs 26 des Schaufelblatts 24 und des Schaufelfußes 14 an der Schaufelfußfläche 16 und gleichzeitig zu einem Konsolidieren des in dem Innenraum 22 der Kapsel 18 eingeschlossenen Pulvers 12. Der Verbindungsbereich 26 ist dabei sowohl dem Schaufelblatt 24 als auch der Kapsel 18 zugeordnet, zumal aus der Kapsel 18 und dem in deren Innenraum 22 enthaltenen Pulver 12 bei dem Wärmezuführverfahren das Schaufelblatt 24 gebildet wird.

Nach der Herstellung des Schaufelblatts 24 wird dieses zum Einstellen einer Korngrößenverteilung einer lokalen Glüherwärmung unterzogen. Des Weiteren werden der Schaufelfuß 14 und das Schaufelblatt 24 nach dem Verbinden einem gemeinsamen Auslagerungsglühen unterzogen um eine gezielte Ausscheidungshärtung herbeizuführen.

Die Schaufel 10 kann nun durch Fügen des Schaufelfußes 14, beispielsweise durch eine Steckverbindung, an dem hier nicht gezeigten Rotorgrundkörper festgelegt werden.

Zusammenfassend ermöglicht das vorgestellte Verfahren die Verwendung von mehreren Werkstoffen und damit von unterschiedlichen TiAl-Legierungen zur Herstellung der Schaufel 10. Damit können auch die unterschiedlichen Werkstoffeigenschaften der jeweiligen Werkstoffe in der Schaufel 10 gezielt genutzt werden. So ist eine flexible Werkstoffwahl bei der Herstellung des Schaufelfußes 14 und des Schaufelblatts 24 möglich und dadurch die gesamte Schaufel 10 besonders exakt hinsichtlich zu erwartender Belastungen auslegbar und herstellbar. Das Schaufelblatt 24 kann durch dessen Herstellung aus der mit dem Pulver 12 befüllten Kapsel 18 mit besonders guten Kriecheigenschaften versehen werden. Dies wäre aufgrund von Anforderungen an eine Mindestduktilität der Schaufel 10 nicht möglich, wenn diese - in aus dem Stand der Technik bekannter Weise - lediglich aus einem Werkstoff gebildet wäre.

Die Schaufel 10 kann durch das beschriebene Verfahren als gradiertes Bauteil aus verschiedenen TiAI-Werkstoffen durch Konsolidieren des Pulvers 12 in der Kapsel 18 sowie durch deren Diffusionsverschweißen auf dem durch Schmieden hergestellten Schaufelfuß 14 ausgebildet werden. Dabei kann die Kapsel 18 in-situ auf dem Schaufelfuß 14 aufgebaut und durch das heiß-isostatische Pressen (HIP) das Schaufelblatt 24 aus der mit dem Pulver 12 befüllten Kapsel 18 erzeugt werden.

Neuartige, hochtemperaturbeständige und hochlegierte TiAI-Legierungen gelten als besonders spröde. Dadurch ist die Auslegung einer Anbindung des Schaufelfußes 14 an den Rotorgrundkörper, welcher auch als Scheibe bezeichnet werden kann, sehr schwierig in Bezug auf etwaige Belastungen und ertragbare plastische Verformungen in einem Kontaktbereich zwischen dem Schaufelfuß 14 und der Scheibe sowie im Schaufelfuß 14 selbst. Da der Schaufelfuß 14 geringeren Temperaturbelastungen aber höheren Spannungen als das Schaufelblatt 24 ausgesetzt ist, das Schaufelblatt 24 aber höchsten Kriechbelastungen standhalten soll, führt dies zu mechanischen Problemen bei der Auslegung und Herstellung. Dies ist damit zu begründen, dass die Kriechbeständigkeit nur zu Lasten der Duktilität erhöht werden kann.

Durch eine Verwendung unterschiedlicher Materialien für den Schaufelfuß 14 und das Schaufelblatt 24 können diese Probleme zumindest vermindert werden. Die Verwendung von unterschiedlichen TiAl-Werkstoffen, deren mechanische Eigenschaften optimal auf die lokalen Anforderungen abgestimmt sind, ermöglicht unter Beibehaltung des Gewichtsvorteils von TiAl die konstruktive Umsetzung mechanisch trennbarer Schaufel-Scheibe-Verbindungen. Der Schaufelfuß 14 und das Schaufelblatt 24, welche jeweils aus unterschiedlichen TiAl-Werkstoffen hergestellt sein können, werden im dicksten Querschnitt an der Schaufelfußfläche 16 des Schaufelfußes 14 und an dem Verbindungsbereich 26 durch Diffusionsschweißen in-situ in einem zumindest teilweise pulvermetallurgischen Herstellprozess durch das heiß-isostatische Pressen verbunden. Durch eine entsprechende Wärmebehandlung (Glüherwärmung, Auslagerungsglühen) der damit geschaffenen Schaufel 10 werden in beiden Teilen, also im Schaufelfuß 14 und im Schaufelblatt 24, voneinander verschiedene Mikrostrukturen eingestellt, welche zum Einhalten von Anforderungen an die Belastbarkeit der Schaufel 10 beitragen. Der Schaufelfuß 14 weist dann eine besonders hohe Duktilität und Festigkeit und dafür eine geringe Kriechbeständigkeit auf. Hingegen weist das Schaufelblatt 24 eine besonders hohe Kriechbeständigkeit und eine konstante Festigkeit bis zu einer Temperatur von bis zu 900°C auf Kosten der Festigkeit bei niedriger Temperatur und geringer Duktilität auf. Als zweiter Werkstoff können TiAl-Legierungen mit hohen W, Mo, Nb, Co, Hf, Y, Zr, Er, Gd, Si, C Anteilen zur Herstellung des Schaufelblatts 24 verwendet werden, ohne dass etwaige Duktilitätsforderungen für den Schaufelfuß 14 unterschritten werden.

### Bezugszeichenliste

- 10: Schaufel
- 12: Pulver
- 14: Schaufelfuß
- 16: Schaufelfußfläche
- 18: Kapsel
- 20: Teilbereich
- 22: Innenraum
- 24: Schaufelblatt
- 26: Verbindungsbereich
- 28: erster Plattformbereich
- 30: zweiter Plattformbereich
- 32: Plattform

## Patentansprüche

1. Verfahren zum Herstellen einer Schaufel (10) für eine Strömungsmaschine, insbesondere für ein Flugtriebwerk, umfassend zumindest folgende Schritte:
- Herstellen eines Schaufelfußes (14) mit einem ersten Plattformbereich (28) aus einem ersten Werkstoff;
- Bereitstellen mindestens einer mit einem metallischen und/oder keramischen Pulver (12) befüllten Kapsel (18) zur Herstellung eines Schaufelblatts (24) mit einem zweiten Plattformbereich (30) an dem ersten Plattformbereich (28), wobei das Pulver (12) zumindest einen zweiten Werkstoff umfasst, welcher von dem ersten Werkstoff verschieden ist;
- Herstellen und Formen des Schaufelblatts (24) aus der mit dem Pulver (12) befüllten Kapsel (18) durch wenigstens ein Wärmezuführverfahren und dabei Verbinden des Schaufelfußes (14), mit dem Schaufelblatt (24) an den jeweiligen Plattformbereichen (28, 30).

2. Verfahren nach Anspruch 1,
**dadurch gekennzeichnet, dass**
die Kapsel (18) durch ein generatives Herstellverfahren, insbesondere durch Elektronenstrahlschmelzen und/oder durch selektives Laserschmelzen, aus dem Pulver (12) hergestellt und mit dem Pulver (12) befüllt wird.

3. Verfahren nach Anspruch 2,
**dadurch gekennzeichnet, dass**
die Kapsel (18) durch das generative Herstellverfahren durch schichtweises Aufbauen der Kapsel (18) an dem Schaufelfuß (14) hergestellt wird.

4. Verfahren nach Anspruch 2 oder 3,
**dadurch gekennzeichnet, dass**
das Pulver (12) vor dem Herstellen der Kapsel (18) durch das generative Herstellverfahren und/oder vor dem Befüllen der Kapsel (18) auf eine Erwärmungstemperatur erwärmt wird, welche kleiner ist, als eine Schmelztemperatur und/oder als eine Sintertemperatur des Pulvers (12).

5. Verfahren nach einem der Ansprüche 2 bis 4,
**dadurch gekennzeichnet, dass**
die Kapsel (18) mit dem Pulver (12) befüllt wird, indem bei dem generativen Herstellverfahren zumindest ein Teilbereich (20) der Kapsel (18) schichtweise als umfangsseitig geschlossenes Hohlprofil aus dem Pulver (12) hergestellt und dabei zumindest eine Teilmenge des Pulvers (12) wenigstens durch den Teilbereich (20) umgeben wird.

6. Verfahren nach einem der vorhergehenden Ansprüche,
**dadurch gekennzeichnet, dass**
die Kapsel (18) derart bereitgestellt wird, dass in einem zur Aufnahme des Pulvers (12) ausgebildeten Innenraum (22) der Kapsel (18) ein Unterdruck erzeugt wird.

7. Verfahren nach einem der vorhergehenden Ansprüche,
**dadurch gekennzeichnet, dass**
ein Verbindungsbereich (26) des Schaufelblatts (24), an welchem dieses mit dem Schaufelfuß (14) verbunden wird, aus dem ersten Werkstoff und/oder aus dem zweiten Werkstoff hergestellt wird.

8. Verfahren nach einem der vorhergehenden Ansprüche,
**dadurch gekennzeichnet, dass**
eine Schaufelfußfläche (16) des Schaufelfußes (14), an welcher dieser mit dem Schaufelblatt (24) verbunden wird, vor dem Verbinden durch ein spanendes Verfahren und/oder durch ein Elektrolyseverfahren geglättet wird.

9. Verfahren nach einem der vorhergehenden Ansprüche,
**dadurch gekennzeichnet, dass**
als das wenigstens eine Wärmezuführverfahren ein heiß-isostatisches Pressen durchgeführt wird.

10. Verfahren nach einem der vorhergehenden Ansprüche,
**dadurch gekennzeichnet, dass**
das Schaufelblatt (24) nach dessen Herstellung zum Einstellen einer Korngrößenverteilung einer lokalen Glüherwärmung unterzogen wird.

11. Verfahren nach einem der vorhergehenden Ansprüche,
**dadurch gekennzeichnet, dass**
der Schaufelfuß (14) und das Schaufelblatt (24) nach dem Verbinden einem gemeinsamen Auslagerungsglühen unterzogen werden.

12. Verfahren nach einem der vorhergehenden Ansprüche,
**dadurch gekennzeichnet, dass**
der Schaufelfuß (14) hergestellt wird, indem ein Körper aus dem ersten Werkstoff bereitgestellt, geschmiedet, homogenisierungsgeglüht und anschließend zu dem Schaufelfuß (14) geformt wird.

13. Verfahren nach einem der vorhergehenden Ansprüche,
**dadurch gekennzeichnet, dass**
als der erste Werkstoff eine TiAl-Legierung, insbesondere eine γ-TiAl-Legierung, bereitgestellt wird.

14. Verfahren nach einem der vorhergehenden Ansprüche,
**dadurch gekennzeichnet, dass**
als der zweite Werkstoff eine TiAl-Legierung, insbesondere eine TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt wird.

15. Schaufel (10) für eine Strömungsmaschine, insbesondere für ein Flugtriebwerk, welche durch ein Verfahren nach einem der Ansprüche 1 bis 14 erhältlich und/oder erhalten ist.
